# EUROPEAN PATENT SPECIFICATION

(11) **EP 2 053 440 B1**
(45) Date of publication and mention of the grant of the patent: **27.06.2012**
(21) Application number: 08253393.6
(22) Date of filing: 21.10.2008
(51) Int. Cl.: G03B 17/04, G03B 17/17, G02B 13/10, G02B 13/16, G02B 15/20

(54) **Imaging apparatus**
Abbildungsvorrichtung
Appareil d'imagerie

(30) Priority: 25.10.2007 JP 2007278237; 24.06.2008 JP 2008187875
(43) Date of publication of application: 29.04.2009
(73) Proprietor: Ricoh Company, Ltd., Tokyo 143-8555 (JP)
(72) Inventor: Yamano, Tohru, Kanagawa-ken (JP)
(74) Representative: Leeming, John Gerard

(56) References cited:
- US-A1- 2006 176 373
- US-A1- 2006 238 882
- US-A1- 2007 091 200

## Description

### BACKGROUND OF THE INVENTION

### Technical Field;

The present invention relates to an imaging apparatus, such as a digital camera, etc., including a lens barrel having a collapsible lens group and used by protruding to a prescribed position. In particular, the present invention relates to an imaging apparatus, suitable for a zoom lens that changes a focal point by mutually moving plural lens groups.

### Background Art;

In an imaging apparatus, such as a digital camera etc. , an imaging lens is rapidly sophisticated to be able to significantly increase a magnification rate of a zoom lens, which is capable of changing a focal point, while being downsized in accordance with a need of a user. Along with such a tendency, an imaging apparatus including an imaging lens having a partially installed collapsible lens barrel is increasingly spreading. Further, in accordance with a further demand of thinning, it is becoming important to decrease a thickness of the lens barrel to the maximum level when collapsed and installed in an imaging apparatus. As a technology meeting such a further demand of thinning the imaging apparatus, it is known that a collapsible system is employed to install a lens barrel in the imaging apparatus during absence of imaging, and a reflection member is employed to bend a light passing through the lens barrel while partially arranging an optical system on the left, right, top, and bottom of the imaging apparatus. The Japanese Patent Application Laid Open No.2007-34013 discloses such a type of technology that a bending section for bending an image light escapes from a first optical axis to create a space in a bending type optical system and a first optical element group is installed moving on the first optical axis in the space for the purpose of downsizing a camera.

However, as disclosed in the Japanese Patent Application Laid Open No. 2007-34013, when a thickness of an optical element included in the collapsible type lens barrel increases as a magnification of an optical zoom highly increases in a camera having the bending optical system, a thickness of the barrel also increases as a problem. In addition, when a distance of movement of a zoom lens group along with a second optical axis becomes longer in accordance with a tendency of a high magnification of the optical zoom lens, width and height of the camera increase perpendicular to the optical axis as a problem. Because, a lens group other then the zoom lens group is located on a second optical axis (i.e., in a direction perpendicular to an optical axis of the collapsible type lens barrel). Further as described in the Japanese Patent Application Laid Open No. 2 006 -330657, it is known that a camera having a lens barrel of a collapsible type is thinned by partially arranging a lens that constitutes an optical system on an optical axis during imaging and evacuating from the optical axis while arranging the lens outside a secured cylinder of the lens barrel when collapsed into the camera.

US 2007/0091200 discloses an image-taking lens unit having first and second lens groups along an object side optical axis, a reflective surface such that the optical path is bent in optical cross section and third and fourth lens groups along an image side optical axis. In order to collapse the unit, the reflective surface and the second lens group may be moved along the image side optical axis and the first lens group moved along the object side optical axis so as to be stored in the space left behind after the movement of the reflective surface and the second lens group.

US 2006/0176373 discloses a lens having first to third lens groups. The second lens group is able to rotate about a supporting shaft to move the second lens group in a circular direction in a plane perpendicular to the optical axis such that the second lens group moves from an inserted position inserted in an optical path to a removed position set out of the optical path.

### OBJECT OF THE INVENTION

The present invention is made in view of the above, and it is the obj ect of the present invention that an imaging optical system is sophisticated by significantly increasing a magnification or the like in an imaging apparatus including a collapsible type lens barrel and a bending optical system.
In addition, a thickness of a collapsible type lens and a body of the imaging apparatus is decreased in a direction in parallel to an incident light axis, and that of the body of the imaging apparatus is also decreased in a direction perpendicular to the incident light axis.

### SUMMARY OF THE INVENTION

The present invention has been made in view of the above noted and another problems and one obj ect of the present invention is to provide a new and noble imaging apparatus.

According to the present invention, there is provided an imaging apparatus as specified in the claims.

### BRIEF DESCRIPTION OF DRAWINGS

A more complete appreciation of the present invention and many of the attendant advantages thereof will be readily obtained as the same becomes better understood by reference to the following detailed description when considered in connection with the accompanying drawings, wherein:
FIG. 1A is a perspective view of a digital camera when viewed from a front right upper side according to one embodiment of the present invention;
FIG. 1B is a perspective view of a digital camera when an imaging lens 101 protrudes to prepare for imaging according to one embodiment of the present invention;
FIG. 2 is a perspective view of the digital camera of FIG. 1A when viewed from a rear side thereof;
FIG. 3 is a block chart specifically illustrating a principal part of the digital camera of FIG. 1A;
FIG. 4 is a cross sectional diagram illustrating a lens configuration of a lens barrel unit used as an imaging lens of the digital camera of FIG. 1A;
FIG. 5 is a perspective view of the entire lens barrel unit used as an imaging lens when collapsed in the digital camera of FIG. 1A;
FIG. 6 is a schematic perspective view of the entire lens barrel unit used as an imaging lens when the digital camera of FIG. 1A executes photographing at a wide-angle end;
FIG. 7 is a perspective view of the entire lens barrel unit used as an imaging lens when the digital camera of FIG. 1A executes photographing at a telescope end;
FIG. 8 is a schematic plan view of the entire lens barrel unit used as an imaging lens of the digital camera of FIG. 1A when the lens barrel unit is collapsed;
FIG. 9 is a schematic rear side view of the entire lens barrel unit used as an imaging lens of the digital camera of FIG. 1A when the lens barrel unit is collapsed;
FIG. 10 is a schematic bottom view of the entire lens barrel unit used as an imaging lens of the digital camera of FIG. 1A when the lens barrel unit is collapsed;
FIG. 11 is a schematic plan view of the principal part of the lens barrel unit used as an imaging lens of the digital camera of FIG. 1A when the lens barrel unit is collapsed;
FIG. 12 is a schematic front view of the principal part of lens barrel unit used as an imaging lens of the digital camera of FIG. 1A when the lens barrel unit is collapsed;
FIG. 13 is a schematic front right upper view of the entire lens barrel unit used as an imaging lens of the digital camera of FIG. 1A when the lens barrel unit is collapsed;
FIG. 14 is a schematic plan view of the lens barrel unit used as an imaging lens of the digital camera of FIG. 1A when the lens barrel unit performs photographing at a wide-angle end;
FIG. 15 is a schematic front view of the lens barrel unit used as an imaging lens of the digital camera of FIG. 1A when the lens barrel unit performs photographing at a wide-angle end;
FIG. 16 is a schematic front right upper view of the lens barrel unit used as an imaging lens of the digital camera of FIG. 1A when the lens barrel unit performs photographing at a wide-angle end;
FIG. 17 is a schematic front view of the lens barrel unit used as an imaging lens of the digital camera of FIG. 1A when the lens barrel unit performs photographing at a telescope end;
FIG. 18 is a schematic front view of the lens barrel unit used as an imaging lens of the digital camera of FIG. 1A when the lens barrel unit performs photographing at a telescope end;
FIG. 19 is a schematic front right upper view of the lens barrel unit used as an imaging lens of the digital camera of FIG. 1A when the lens barrel unit performs photographing at a telescope end;
FIG. 20 is a specific perspective view of a second lens group 12 included in the lens barrel unit used as an imaging lens of the digital camera of FIG. 1A when escaping from an optical axis;
FIG. 21 is a specific perspective view of the second lens group 12 included in a lens barrel unit used as an imaging lens of the digital camera of FIG. 1A when photographing;
FIG. 22 illustrates an exemplary movement of first and second lens groups in a lens barrel unit used as an imaging lens of the digital camera of FIG. 1A.
FIG. 23 is a perspective view illustrating an exemplary exterior shape of a prism 13;
FIG. 24A illustrates a bottom side view of a principal part of the lens barrel of the imaging lens photographing at the wide angle end; and
FIG. 24B is a chart partially illustrating the principal part of the lens barrel of FIG. 24A specifically.

### PREFERRED EMBODIMENTS OF THE PRESENT INVENTION

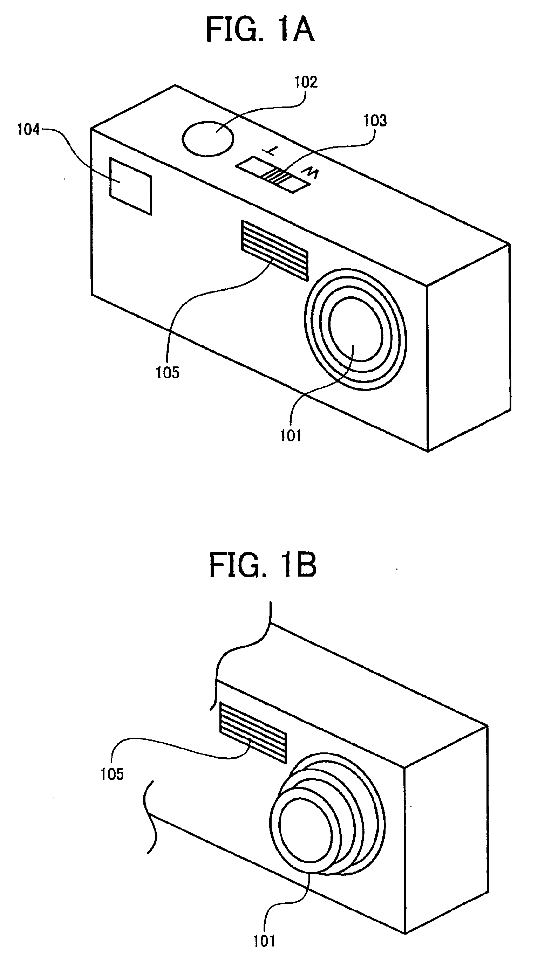

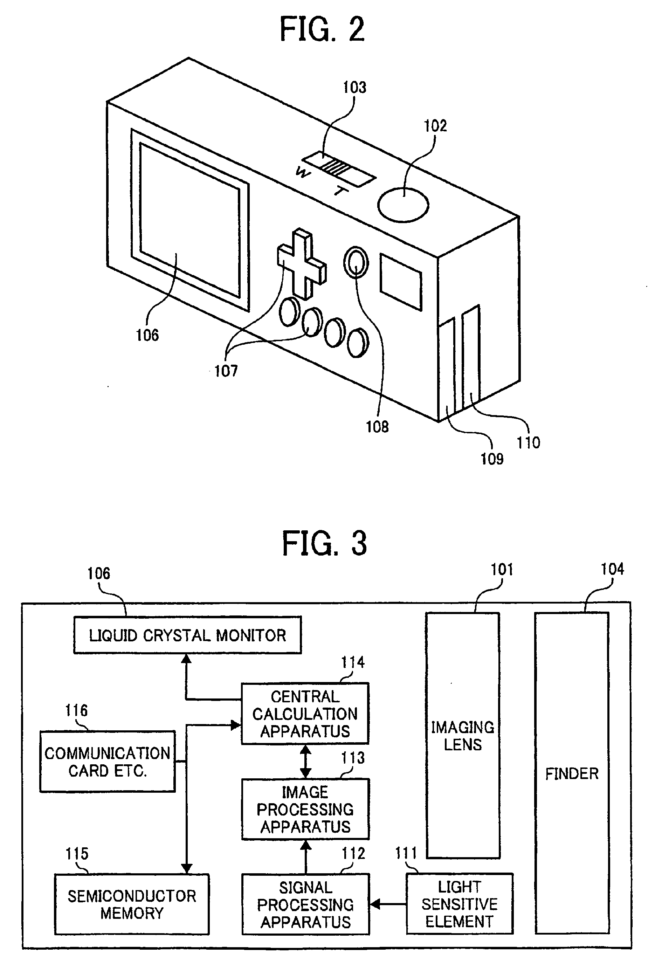

Referring now to the drawings, wherein like reference numerals and marks designate identical or corresponding parts throughout several figures, in particular in FIGS. 1A to 3, a relevant part of a digital camera is described. FIGS. 1A and 1B are overviews of the digital camera when viewed from a front side, i.e., an object side. FIG. 1B illustrates an imaging condition where an imaging lens 101 protrudes. FIG. 2 is an overview of the digital camera when viewed from a rear side, i.e., a photographer side. FIG. 3 is a block chart illustrating functions of the digital camera. A mobile information terminal apparatus, such as a PDA (personal data assistant), a mobile phone, etc., including a camera function enters a market, recently. Even though such a mobile information terminal apparatus differently appears slightly, it includes substantially the same function and configuration as the digital camera.

As shown in FIGS. 1 and 2, the digital camera includes an imaging lens 101, a shutter button 102, a zoom lever 103, a finder 104, a strobe light 105, a liquid crystal monitor 106, an operation button 107, a power source button 108, a memory card slot 109, and a communications card slot 110, or the like. Further included are a light-sensitive element 111, a signal processing device 112, an image processing device 113, a central processing unit 114, a semiconductor memory 115, and a communication cards 116 or the like as shown in FIG. 3. The digital camera includes an imaging lens 101 and an area sensor, such as a complementary metal oxide semiconductor (CMOS) imaging element, a CCD (charge coupled element) imaging element, etc. Thus, an image to be formed from an obj ect by an imaging lens 101 serving as an imaging optical system is read by the light sensitive element 111. The imaging lens 101 can be a zoom lens employing a lens barrel mechanism of the present invention as mentioned later in detail. An output of the light sensitive element 111 is processed and converted into digital image information by the signal processing device 112 controlled by the CPU 114. Image information digitized by the signal processing device 112 undergoes prescribed image processing of the image processing device 113 also controlled by the CPU 114, and is then recorded in a semiconductor memory 115, such as a none volatile memory, etc.

The semiconductor memory 115 can be a memory card either attached to a memory card slot 109 or built in the camera body. The liquid crystal monitor 106 can display an image either just photographed or recorded in the semiconductor memory 115. An image recorded in the semiconductor memory 115 can be transmitted to an outside via the communication card 116 or the like attached to the communication card slot 110. The imaging lens 101 is collapsed and buried in the camera body in a collapsed state as shown in FIG. 1A when the digital camera is carried. When a user turns on the power supply by operating a power supply button 108, the barrel protrudes from the camera body as shown in FIG. 1B. At this moment, in the barrel of the imaging lens 101, each of groups of optical systems constituting a zoom lens provides a wide-angle end arrangement. By operating the zoom lever 103 for magnification, each of the optical groups is changed to provide telescope end arrangement. An optical system of the finder 104 is preferably linked with a change in a field angle of the imaging lens 101 to execute magnification. In many cases, by depressing the shutter button 102 by half, focusing is executed. Photographing is executed when the shutter button 102 is completely depressed, and the above-mentioned processing is then executed.

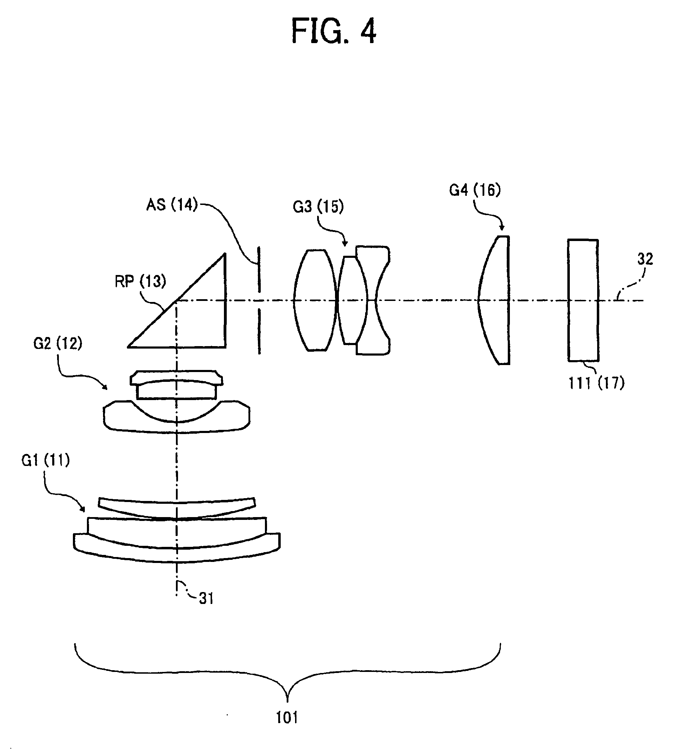

An operation bottom 107 is operated in a prescribed manner either when an image recorded in the semiconductor memory 115 is displayed on the liquid crystal monitor 106, or is transmitted to an outside via the communication card 116 or the like. The semiconductor memory 115 or the communication card 116 or the like are used being attached to a private or general purpose use slot, such as a memory card slot 109, a communication card slot 110, etc. An imaging lens 101 is optically configured as shown in FIG. 4. Specifically, the imaging lens 101 of FIG. 4 constitutes a zoom lens capable of freely changing a focal point, and includes first to forth lens groups G1 to G4 in this order from an object side as shown in the drawing. In this situation, in order to make the entire imaging lens 101 into a bending optical system, a prism RP is arranged between the second and third lens groups G2 and G3 as a reflection member to reflect an imaging light flux by the angle of 90 degree. Further, a diaphragm-shutter unit AS is arranged between the prism RP and the third lens group G3. The first lens group G1 includes a cemented lens formed by tightly contacting negative and positive meniscus lenses each other with each surface being convex on the object side, and a positive meniscus lens with a convex surface on the object side. These lenses are arranged in series in this order from the object, thereby serving as a first zoom group. The second lens group G2 comprises a negative meniscus lens with a convex surface on the object side and a cemented lens, which includes both of a positive lens having a flat convex lens with a convex surface arranged on an imaging surface side and a negative meniscus lens with a convex surface arranged on the image surface side each tightly contacting the other. The negative meniscus lens and the cemented lens are arranged in this order from the object side, thereby serving as a second zoom lens group.

The third lens group G3 comprises a cemented lens of a positive lens with convex surfaces at its both sides, a positive lens with convex surfaces at its both sides, and a negative lens with concave surfaces at its both sides each arranged tightly contacting each other in series in this order from the object, thereby serving as a focusing group for focus adjustment use. The fourth lens group G4 includes a positive lens having a both side convex lens with a stronger convex surface on the object side. An imaging surface including imaging elements is formed on the farther side of the fourth lens group G4 from the object. Such a third lens group G3 can be used to function as an aberration correction group for correcting an aberration caused by zooming. Such a fourth lens group G4 can also be used to function as a focusing group for focus adjustment use. The imaging lens of FIG. 4 executes zooming by moving the first and second lens groups G1 (including the fist and second zoom group) and G2, as well as focusing by moving the third lens group G3 as a focusing group. When the third lens group G3 is regarded as a correction group, zooming is performed by moving the first lens group G1, second lens group G2, and the third lens group G3 linking with each other, while focusing by moving the fourth lens group G4. Specifically, the above-mentioned focusing executed by depressing the shutter bottom 2 by half can be performed by moving either the third lens group G3 or the fourth lens group G4 or the like. When the imaging lens 101 is brought into a photographing condition, the first and second lens groups G1 and G2 arranged on the first optical axis 31 are collectively regarded as a first optical axis lens group. Whereas the third and fourth lens groups G3 and G4 arranged on the second optical axis 32 is collectively regarded as a second optical axis lens group.

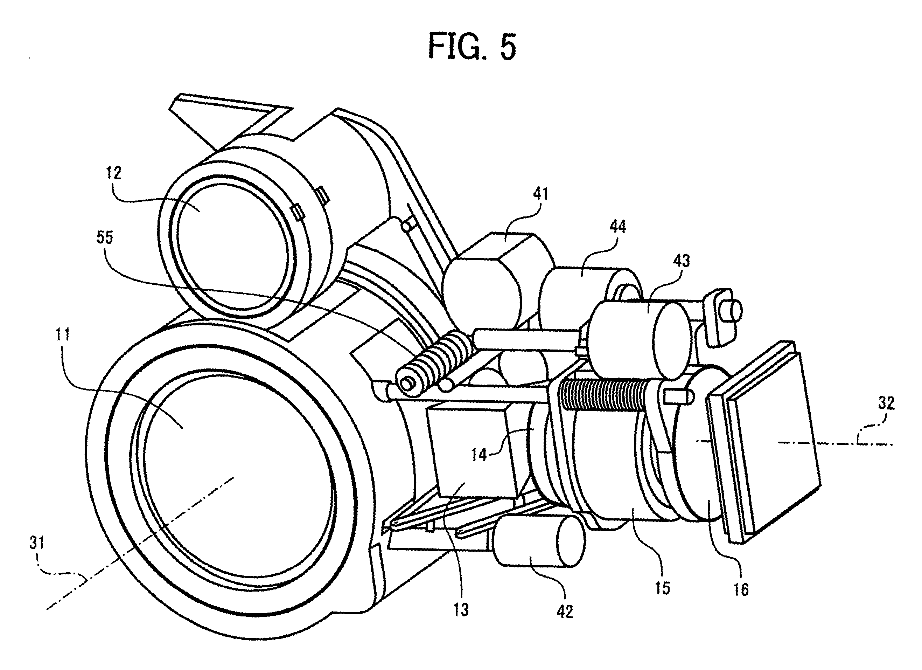

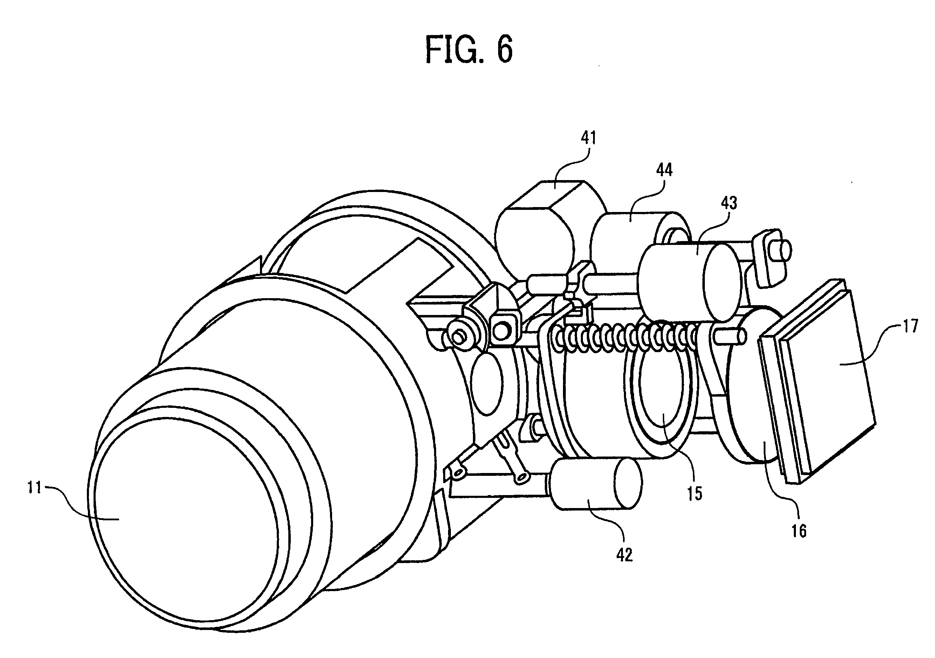

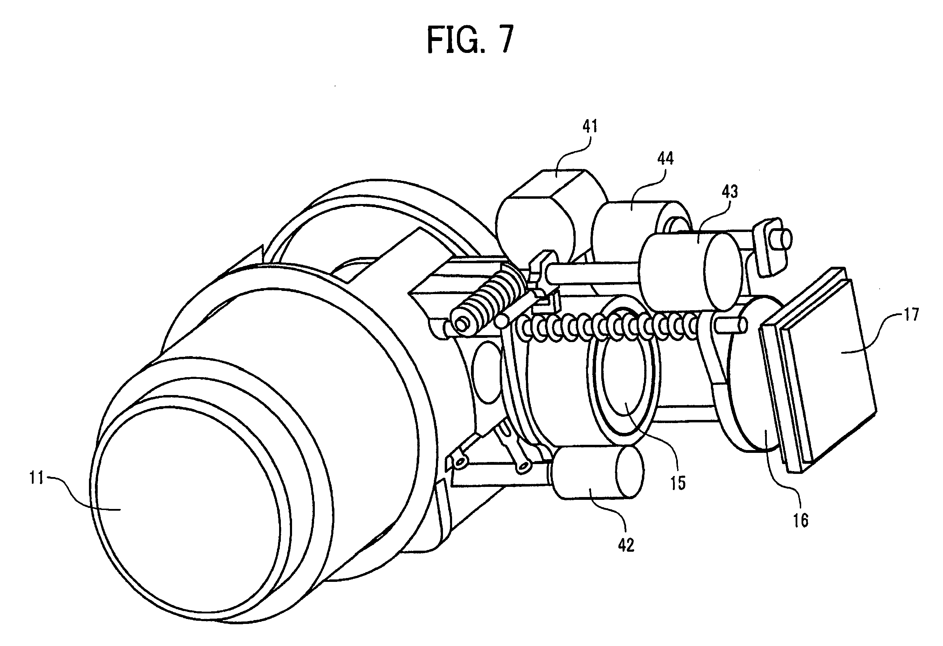

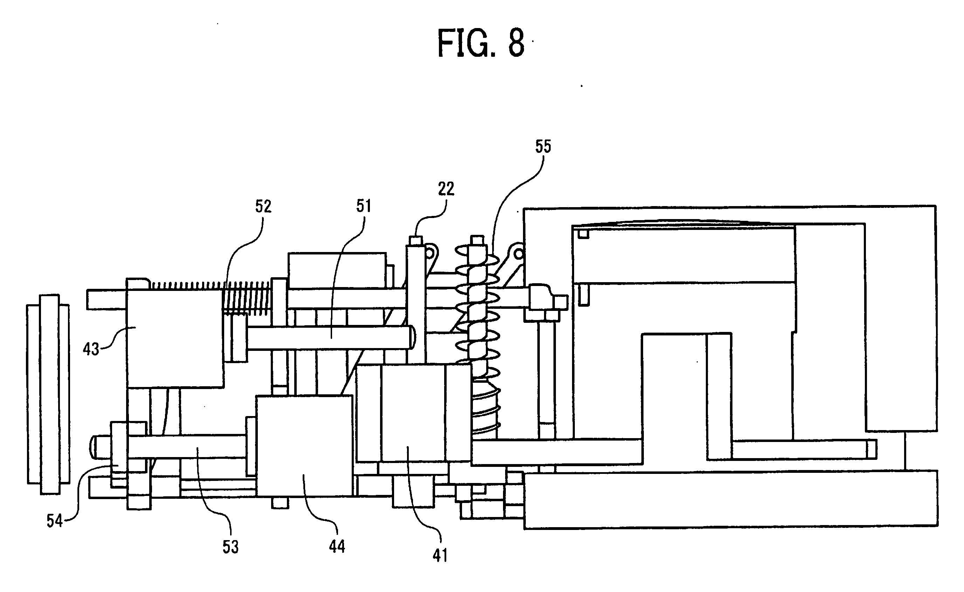

Now, the imaging lens 101 is described more in detail. FIGS. 5 to 21 illustrate a relevant part of a lens barrel unit having a driving mechanism for the imaging lens. FIG. 5 is a perspective view when the lens barrel unit of an imaging lens is collapsed in a digital camera. FIG. 6 is a perspective view of the lens barrel unit of an imaging lens 101 photographing at a wide-angle (WIDE) end. FIG. 7 is a perspective view of the lens barrel unit of an imaging lens 101 photographing at a telescope (TELE) end. FIGS. 8 to 13 illustrate installation states as illustrated in FIG. 5. FIG. 8 is a plan view of the entire digital camera.

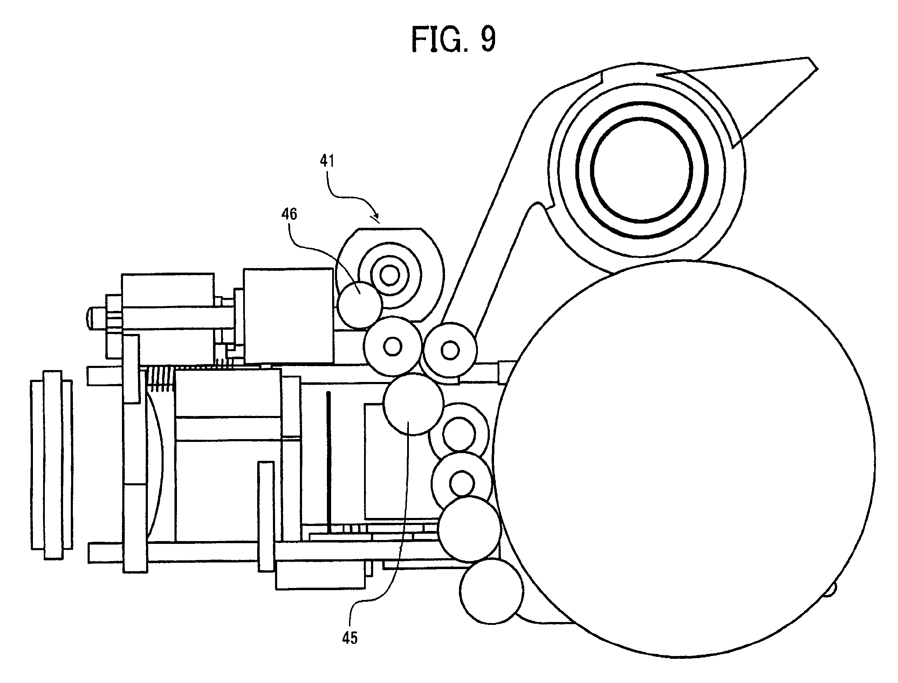

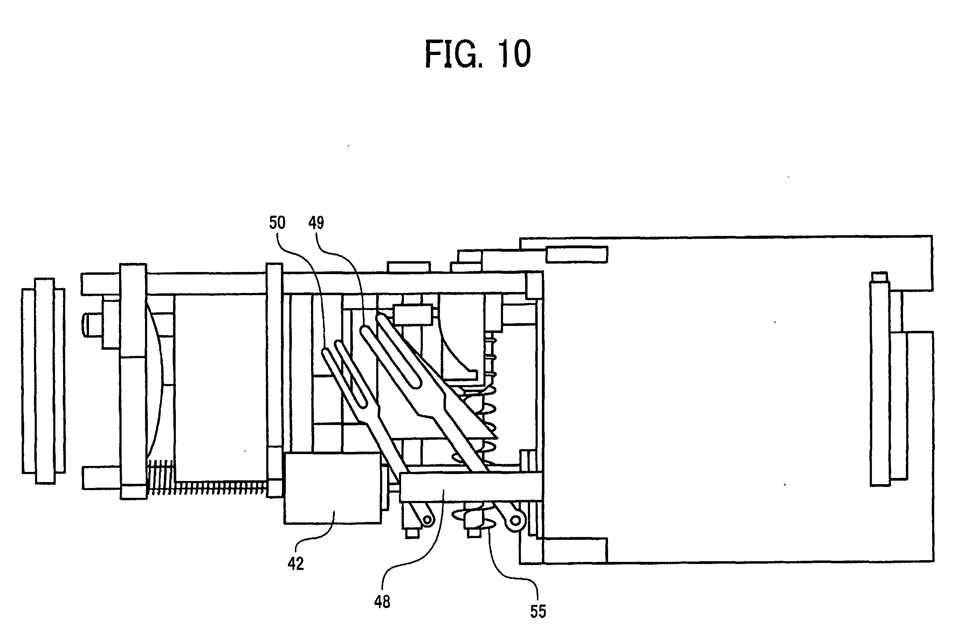

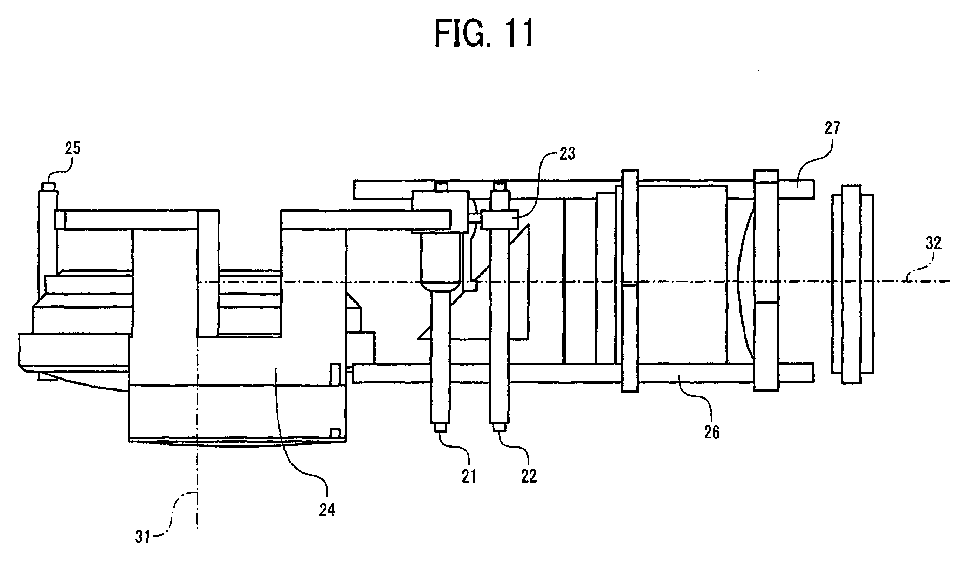

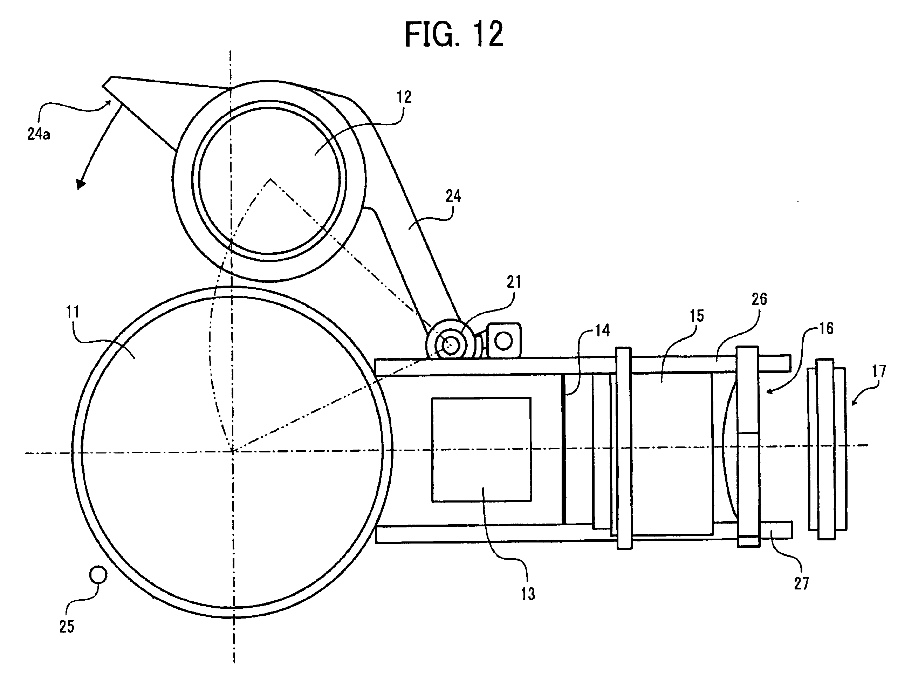

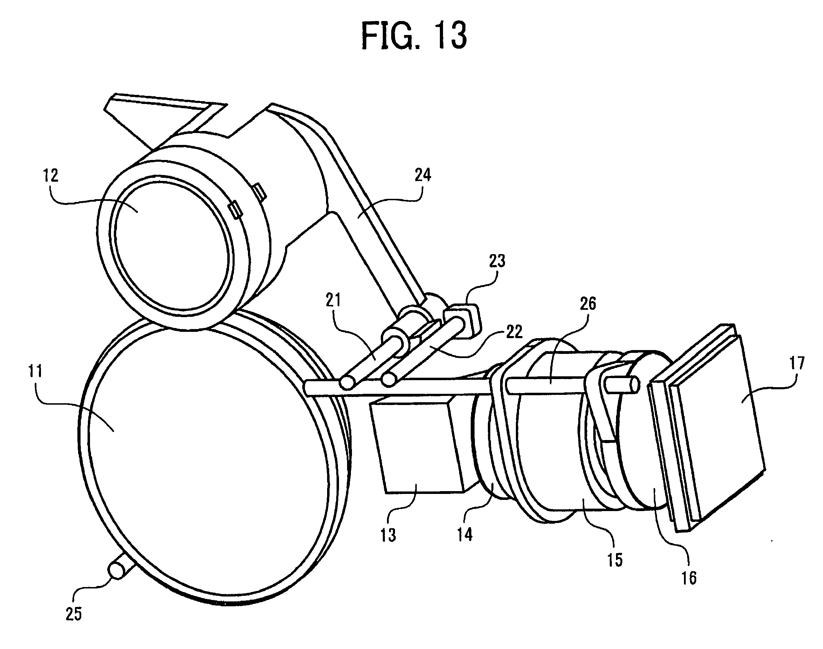

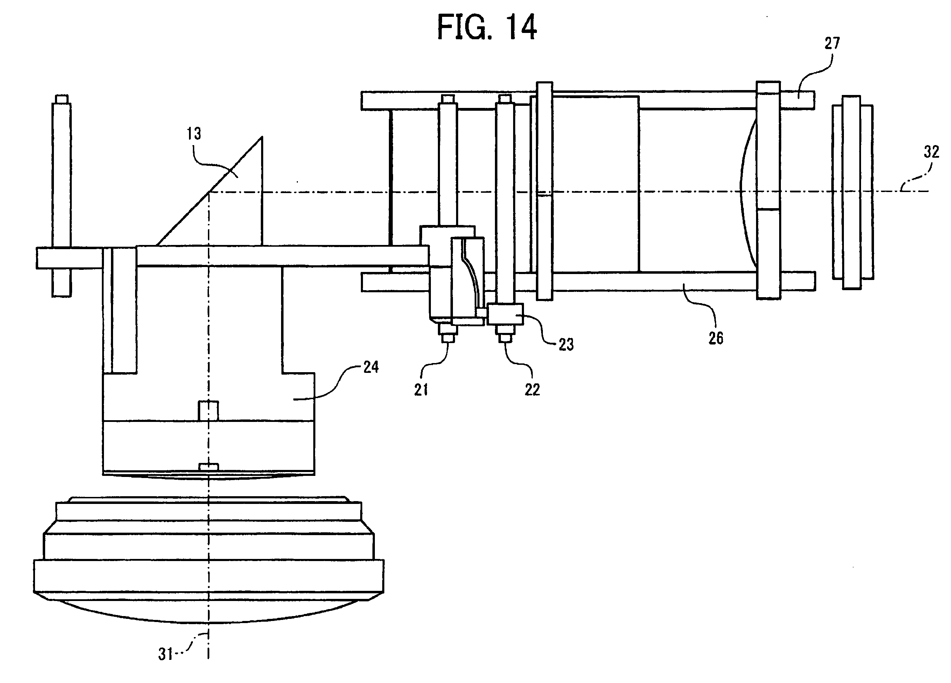

FIG. 9 is a rear side view, and FIG. 10 is a bottom view. FIG. 11 is a plan view illustrating a large part of the driving mechanism of FIG. 8 in a point symmetrical state. FIG. 12 is a plan view illustrating a large part of the driving mechanism. FIG. 13 is a perspective view partially illustrating the driving mechanism. FIGS. 14 to 16 illustrate photographic conditions of the lens barrel unit of the imaging lens 101 photographing at the wide-angle end as described with reference to FIG. 6.

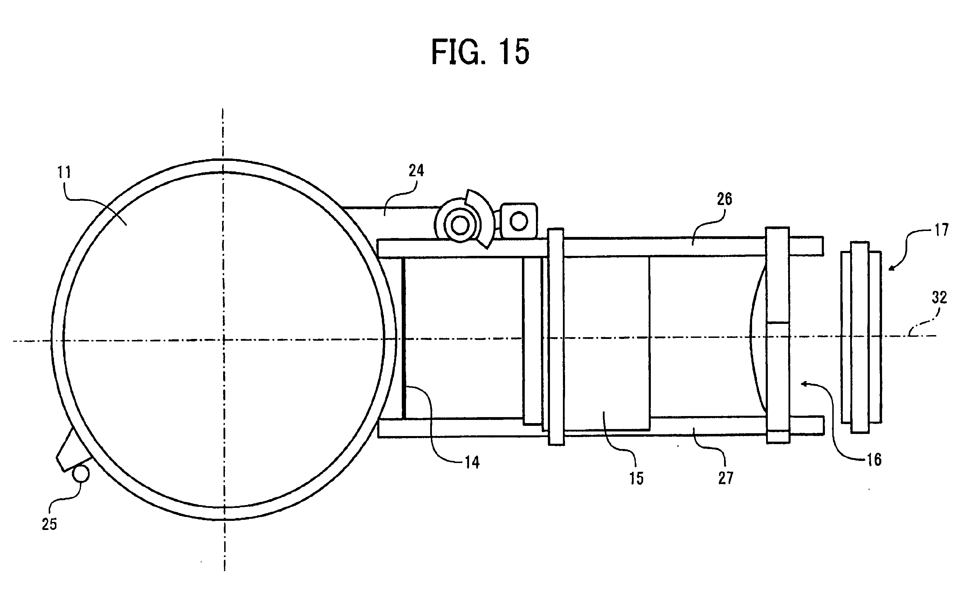

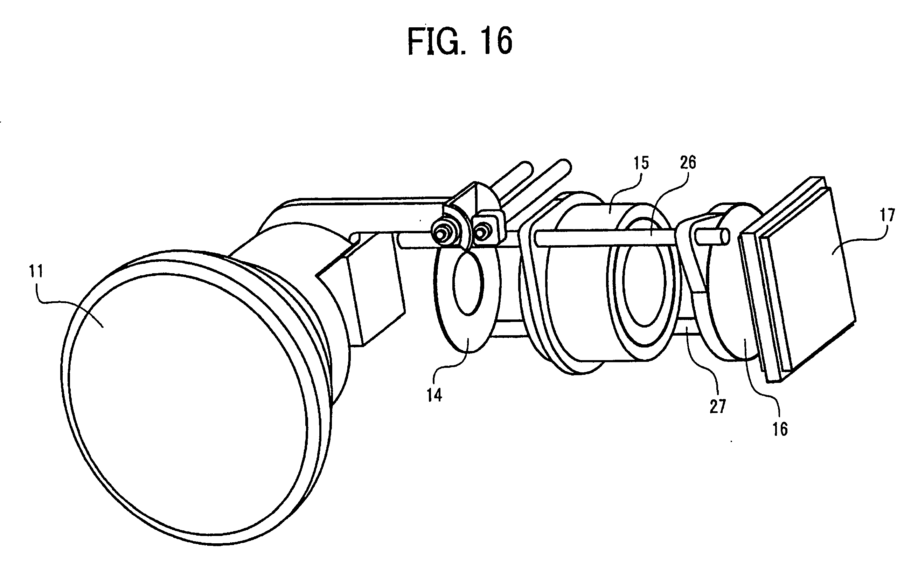

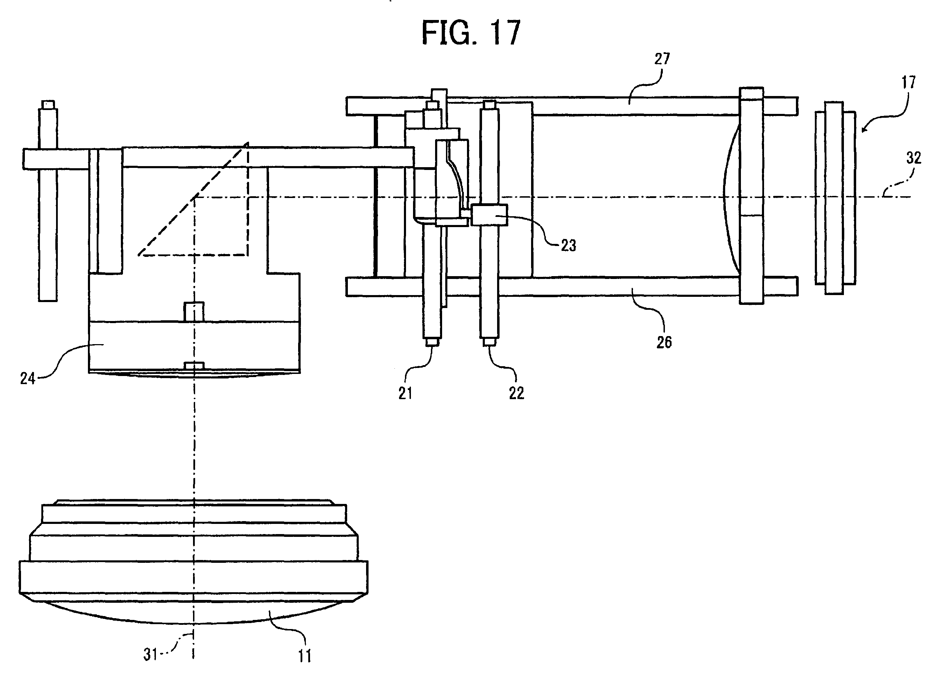

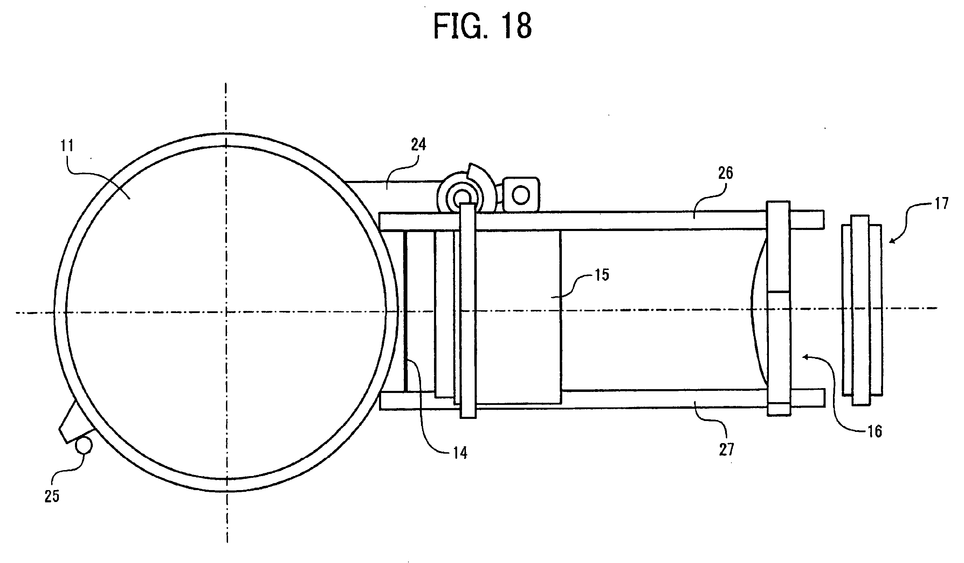

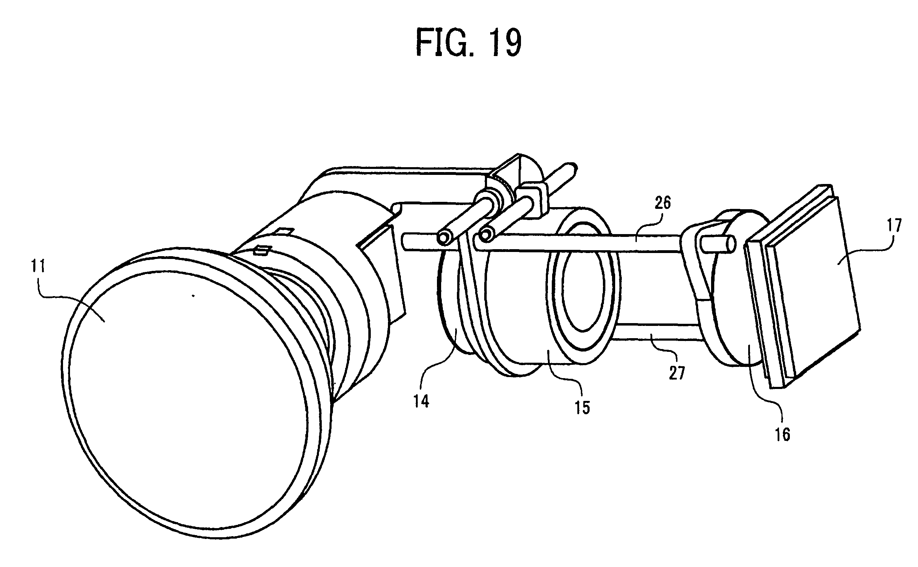

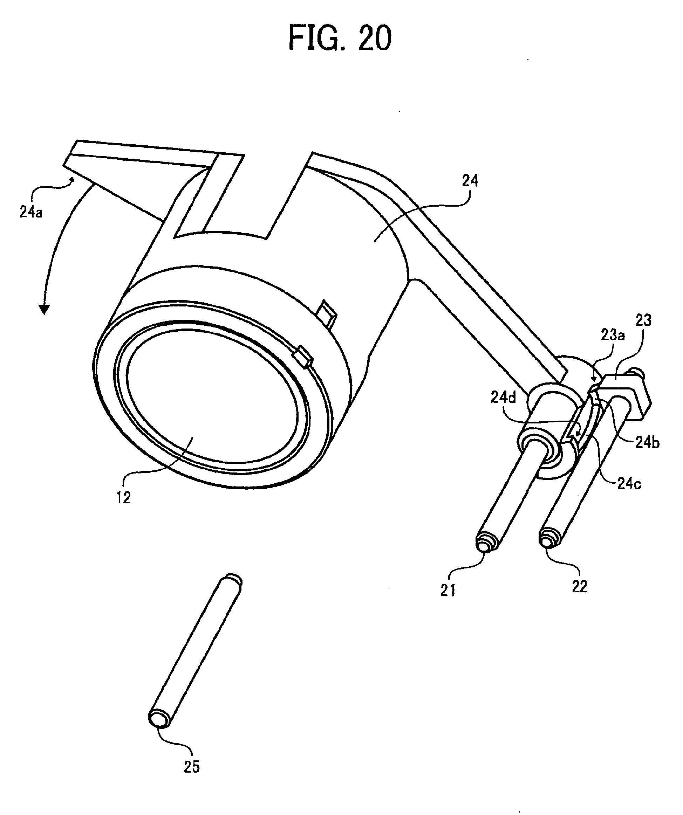

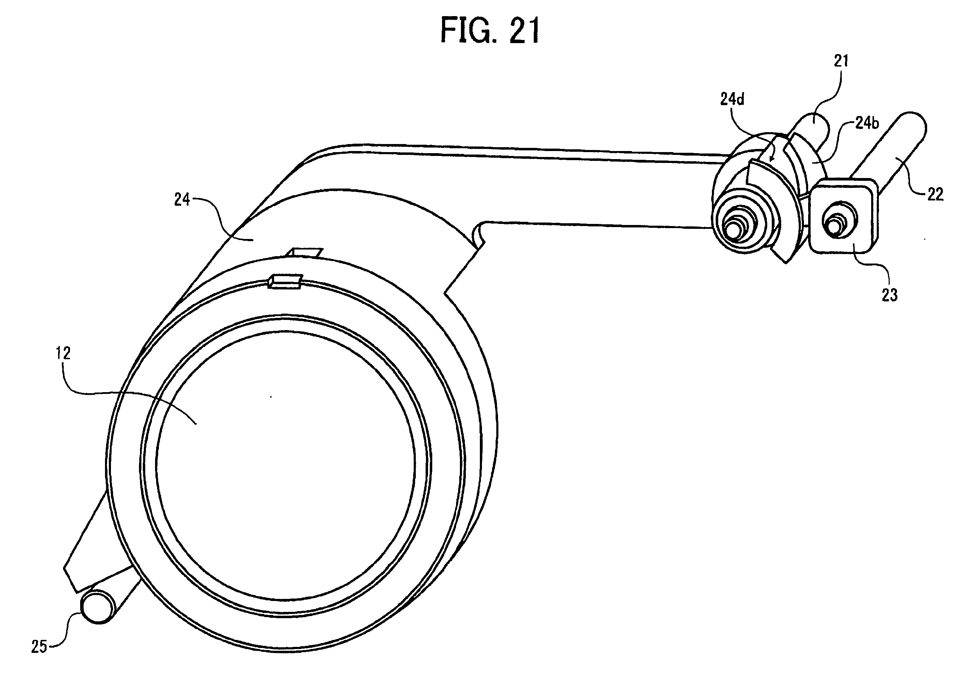

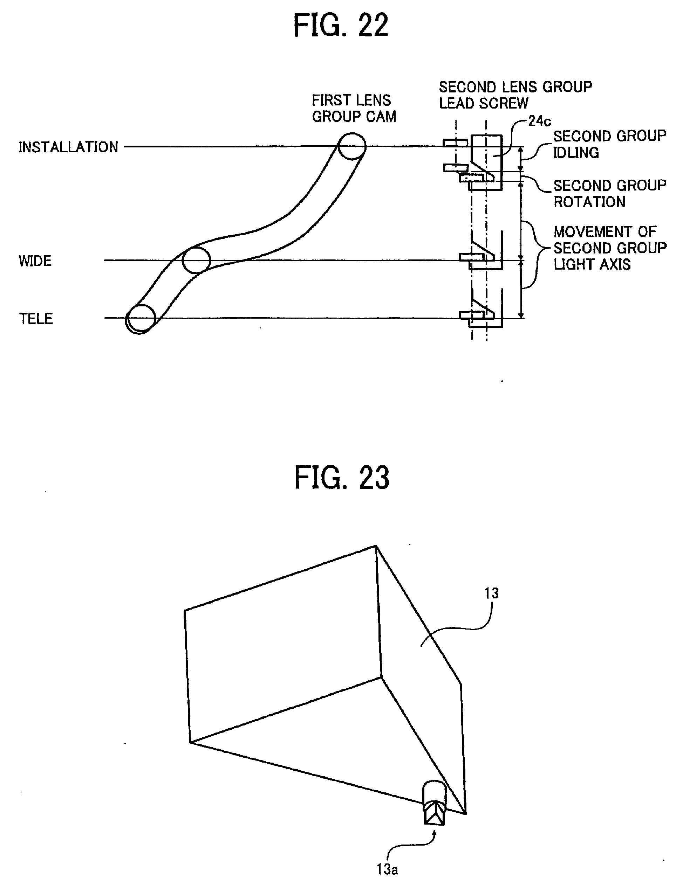

FIGS. 14 and 15 are each plan view partially illustrating the driving mechanism. FIG. 16 is a perspective view partially illustrating the driving mechanism. FIGS. 17 to 19 illustrate conditions of the lens barrel unit of the imaging lens 101 photographing at the wide-angle end as described with reference to FIG. 7. FIG. 17 is a plan view partially illustrating the drivingmechanism. FIG. 18 is a plan view partially illustrating the driving mechanism. FIG. 19 is a perspective view partially illustrating the driving mechanism. FIGS. 20 to 21 each illustrates only an evacuation lens group, and FIG. 20 illustrates an evacuation condition. FIG. 21 illustrates a condition when set on the optical axis. FIG. 22 illustrates a driving operation of the first and second lens groups.

In FIGS. 5 to 21, the lens barrel of the imaging lens 101 includes a first lens group 11 (corresponding to G1 of FIG. 4), a second lens group 12 (corresponding to G2), a prism 13 (corresponding to RP), a diaphragm-shutter unit 14 (corresponding to AS), a third lens group 15 (corresponding to G3), a fourth lens group 16 (corresponding to G4), an imaging element 17 (corresponding to a light sensitive unit), a first main axis 21, a lead screw 22, a female screw 23, a second lens movement frame 24, a first sub axis 25, a second main axis 26, and a second sub axis 27. As shown in FIG. 6, the lens barrel unit includes a first-second group motor 41, a prism-diaphragm motor 42, a third group motor 43, a fourth group motor 44, a first group gear 45, a first-second group gear 46, a prism-diaphragm cam 48, a prism lever 49, a diaphragm group lever 50, a third group lead screw 51, a third group female screw 52, a fourth group lead screw 53, a fourth group female screw 54, and a compression torsion spring 55.

FIGS. 5 to 21 partially illustrate the first and second optical axes 31 and 32. In this situation, the prism 13 is utilized as a reflection member. The first main axis 21 serves as a rotational center for the second lens group 12 and a guide axis for the second lens group 12 to move along the first optical axis 31. The lead screw 22 is used to move and evacuate the second lens group 12. The female screw 23 is rotated and moves on the lead screw 22 and is used to move and evacuate the second lens group 12. The second lens movement frame 24 holds the second lens group 12, and is biased by the compression torsion spring 55 serving as a elastic member in a direction as shown by an allow. The sub axis 25 serves as a stopper for positioning the second lens group 12 on the optical axis. The second main axis 26 moves all of the prism 13, the aperture diaphragm-shutter unit 14, and the third and fourth lens groups 15 and 16 along the second axis 32. The sub axis moves all of the prism 13, the aperture diaphragm-shutter unit 14, and the third and fourth lens groups 15 and 16 along the second axis 32.

Upon receiving a signal representing that the first lens group 11 is drawn from the collapsed state of FIG. 5 to a prescribed position along the first optical axis 31 by the first-second group motor 41 and the second group lead screw 22, the first-second group motor 41 and the gears 45 and 46 cooperate and rotate the lead screw 22, so that the female screw 23 is drawn along the lead screw 22 and the second lens-movement frame 24 is rotated around the main axis 21 as shown in FIG. 20. When a tip 24a of the second lens movement frame 24 contacts the sub axis 25, the second lens group 12 is positioned on the first optical axis 31. The second lens movement frame 24 is drawn out on the first optical axis 31 when the lead screw 22 is further rotated. Upon receiving a signal indicating that the second lens movement frame 24 has been drawn to the prescribed position, the prism 13 is moved on the second optical axis 32 and positioned on the first optical axis 31 by the aperture diaphragm motor 42 via the prism-aperture diaphragm cam 48 and the prism lever 49 or the like.
Upon receiving a signal indicating that the prism 13 has moved to the prescribed position, the aperture diaphragm-shutter unit 14 and the third and fourth lens groups 15 and 16 are moved on the second optical axis 32 and stopped at prescribed positions, respectively, by the aperture diaphragm motor 42 via all of the prism-aperture diaphragm cam 48, a diaphragm lever 50, the third group motor 43, the third group lead screw 51, the third group female screw 52, the further group motor 44, the fourth group lead screw 53, and the fourth group female screw 54 or the like.

When a user operates the zoom lever 103 and moves from the wide angle end to the telescope end, the first lens group 11 is further drawn on the first optical axis, while the lead screw 22 reversely rotates to when rotating during an operation from the collapsed state to the photographing condition and the second lens movement frame 24 is retracted. At this moment, the prism 13 does not move, while the aperture diaphragm-shutter unit 14 and the third and fourth lens groups 15 and 16 move on the second optical axis 32. When collapsed, the aperture diaphragm-shutter unit 14, and the third and fourth lens groups 15 and 16 move toward the imaging element 17 on the second optical axis 32. As a result, a prescribed space is formed and the prism 13 moves to the prescribed space. Upon receiving a signal indicating that the prism 13 has arrived at the prescribed position, the lead screw 22 is reversely rotated to when rotated initially, so that the second lens group 12 is retracted into the prescribed space formed by movement of the prism 13. At same time, the lens movement frame 24 is rotated around the main axis 21. Upon receiving a signal indicating that the second lens movement frame 24 has been rotated and arrived at a prescribed position, the first lens group 11 is retracted along the first optical axis 31.

As shown in FIG. 20, the second lens movement frame 24 is biased by the compression torsion spring 55 and is never rotated. Because, the second lens movement frame 24 is engaged with a convex 23a of the female screw 23 on the lead screw 22 and a portion 24b of a cam provided on the second lens movement frame 24. The female screw 23 is not rotated even though the lead screw 22 is rotated due to a direct advance key and goes straight ahead along the lead screw 22. When the lead screw 22 is rotated tomove the female screw, the second lens movement frame 24 rotates in a direction as shown by an arrow. Because, the second lens movement frame 24 moves on a cam 24c provided on the second lens group movement frame 24. The second lens movement frame 24 is further rotated by rotating the lead screw 22. When the convex 24a of the second lens group movement frame 24 contacts the sub axis 25, the second lens group movement frame 24 stops rotating. Further, when the lead screw 22 is rotated, the female screw 23 contacts a wall section 24d provided on the second lens group movement frame 24. After that, the second lens group movement frame 24 is moved along the main axis 21 as shown in FIG. 21.

When the first-second group motor 41 operates via the first-second gear 46 and the second group lead screw 22, a first group cam, not shown, operates via the first-second gear 46 and the first gear 46, so that the first lens group 11 goes ahead from a collapsed state as shown in FIG. 22. Then, even though the lead screw 22 moves the female screw 23 initially, the second lens movement frame 24 is not moved by the cam 24c. However, when the first lens group 11 goes ahead by a prescribed amount, a space is formed behind the first lens group 11, which is capable of installing the second lens group 12. Then, by rotating the second lens movement frame 24 using the cam 24c, the second lens group 12 is inserted behind the first lens group 11. After that, as mentioned earlier, the second lens movement frame 24 is moved by the wall section 24d along the main axis 21, thereby a photographing condition is provided. This condition is maintained during the photographing at from the wide-angle end to the telescope end. Specifically, in the photographing condition, the first and second lens groups 11 and 12 are arranged in this order on the first optical axis 31 from the object. Then, a light flux on the first optical axis 31 is reflected by the prism 13 to a direction of the second optical axis 32 arranged perpendicular to the first optical axis 31. The aperture diaphragm-shutter unit 14 and the third and forth lens groups are arranged on the second optical axis 32, while the imaging element 17 executes imaging.

To collapse from this state, the fourth and third lens groups 16 and 15 as well as the aperture diaphragm-shutter unit 14 are moved on the second optical axis 32 in series toward the imaging element 17, and the prism 13 is moved on the second optical axis 32 outside the first optical axis 31. Then, the second lens group 12 temporarily moves to a space formed by the movement of the prism 13 along the first optical axis 31. Then, the second lens group 12 rotates and evacuates from the first optical axis 31. The prism 13 then moves. The first lens group 11 is then installed and collapsed in the space formed by the movement of the second lens group 12.
Transition from the collapsed installation state to the photographing condition is executed as follows. In contrast to the above, the fast lens group 11 initially moves toward the object on the optical axis 31. Then, the second lens group 12 rotates and enters the space formed behind the first lens group 11 by the movement. Then, the second lens group 12 advances toward the object. The prism 13 returns to the reflection position spaced by the movement of the second lens group 12 along the second optical axis 32. The third and fourth lens groups 15 and 16 as well as the aperture diaphragm-shutter unit 14 advance to the photographing position on the second optical axis 32.

In these operations, the first and second lens groups 11 and 12 are driven by the first-second group motor 41 via all of the first group gear 45, the first-second group gear 46, the second group lead screw 22, and the second lens movement frame 24. The prism aperture diaphragm motor 42 drives the prism 13 and the aperture diaphragm-shutter unit 14 via the prism aperture diaphragm cam 48, the prism lever 49, and the diaphragm lever 50. The fourth lens group 16 is driven by the fourth group motor 44 via the fourth group lead screw 53 and the fourth group female screw 54. The third lens group 15 is driven by the third group motor 43 via the third group lead screw 51 and the third group female screw 52. In the photographing condition, the all of the lens groups 11, 12, 15 and 16 as well as the prism 13 are positioned on either the first or second optical axis 31 or 32. Whereas in the collapsed and installed state, the second lens group 12 is evacuated from the first optical axis 31 among the lens groups 11 and 12 arranged along the first optical axis 31, while the second lens group 12 is moved and installed in a space formed by movement of the reflection member 13 along the second optical axis 32. Thus, each of the lens barrel and the camera body can be thinned.

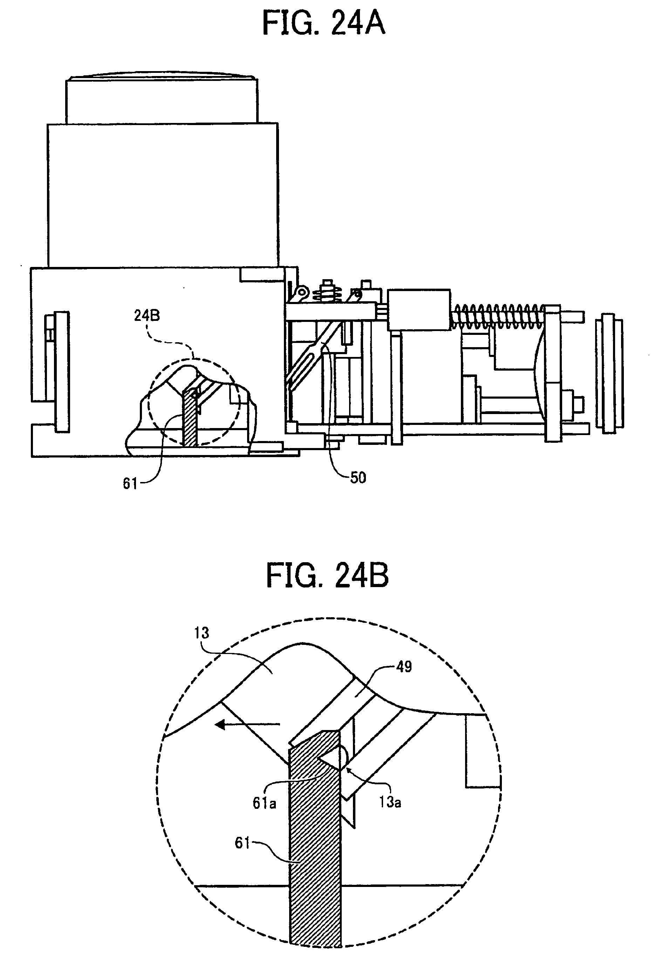

Each of the lens barrel and the camera body can also be thinned by collapsing the first lens group 11 into the space formed by evacuating the second lens group 12 from the optical axis. By moving the second lens group 12 along the first optical axis 31 to the space formed by moving the reflection member 13 and then evacuating the second lens group 12 from the first optical axis 31 when the second lens group 12 is collapsed, each of the lens barrel and the camera body can also be thinned. By using a back and forth movement mechanism (22, 45, 46) for moving the first lens group 11 back and forth as an actuator (including the first-second group motor 41) of a mechanism capable of forwarding and evacuating the second lens group 12 from the first optical axis 31, a cubic volume of the camera body can also be decreased. By upwardly evacuating the second lens group 12 from the first optical axis 31 to above the optical axis of the lens barrel, it can stably operate on the first optical axis 31 due to gravity in the photographing condition, thereby a fine image can be obtained. Further, to more accurately position the prism 13 in the photographing state, a prescribed device can be employed as mentioned below with reference to FIGS. 23 and 24, wherein FIG. 24 is referred when an engagement between the prism 13 of FIG. 23 and a driving mechanism is described.

As shown, the prism 13 serving as a reflection member is biased by a bias member, such as a spring, etc., from the installed and collapsed state to the photographing state. The prism 13 is stopped at a position when engaging with a stopper member 61. Accordingly, an engaging section 13a having a cylindrical column as a protrusion with a triangle pole at its tip is formed on a side surface in the vicinity of an injection side of a reflection surface of the prism 13 as shown in FIGS. 23 and 24. The triangle pole section almost has a cross section of an isosceles triangle, and an edge corresponding to a peak of the isosceles triangle is facing in a movement direction from the installed and collapsed state to the photographing state. The cylindrical column of the engaging section 13a engages with a fork section of the prism lever 49 shaped like a tuning fork. As shown in FIG. 24B, the triangle pole engages with the stopper member 61 for positioning use that protrudes from a securing section securing the lens barrel unit. An engagement section 61a having a U-shaped opening is formed on the stopper member 61 in the movement direction to oppose the triangle pole of the engagement section 13.

When the photographing state is changed to the collapsed state, the prism 13 is driven by the prism-aperture diaphragm motor 42 (see, FIGS. 5 and 6) via the prism-aperture diaphragm cam 48 and the prism lever 49 against the bias of the bias member. When the collapsed state is changed to the photographing state, the prism 13 is driven by the prism-aperture diaphragm motor 42 via the prism-aperture diaphragm cam 48 and the prism lever 49. Since the bias member biases the prism 13 in the moving direction at the moment, a slight allowance is provided at the engagement portion between the fork section of the prism lever 49 and the engagement section 13a. Thus, the prism 13 is precisely positioned when the triangle pole section of the engagement section 13a engages with the U-shape engagement section 61a. In addition, due to fitting of the triangle pole section into the U-shape engagement section, the prism 13 is prevented from its displacement or inclination as much as possible. If a reflection mirror is employed as the reflection member, a cubic volume of the reflection member as well as a space created by evacuation of the reflection member decrease, thereby a cubic volume of the camera body decreases.

By using a prism serving as a reflection member, a length of an optical path can be decreased at a time of photographing, thereby a cubic volume of the lens barrel decreases.
By making light input and output surfaces of the prism in a convex or concave state and thereby optically empowering thereof, power or a number of the other lenses constituting the lens group can be decreased while a cubic volume of the lens barrel decreases. By using a light-shielding mask in the vicinity of the light input and output surfaces of the prism 13, needless inner surface reflection can be suppressed in the prism 13, thereby a fine image can be obtained. Further, by arranging almost similar light shielding masks in the vicinity of the light input and output surfaces of the prism 13, respectively, the needless reflection can be suppressed in the prism 13. Further, by arranging a light reflection preventing device at either a ceiling or both sides of the reflection surface of the prism 13, the needless reflection can be suppressed in the prism 13.
By using a hair implantation sheet as a reflection preventing device, the inner surface reflection is readily prevented in the prism 13. By arranging a light shield mask in the vicinity of the light reflection surface of the light reflection mirror, irregular reflection can be suppressed at a prescribed section other than the reflection surface, thereby a fine image can be obtained

Obviously, numerous additional modifications and variations of the present invention are possible in light of the above teachings. It is therefore to be understood that within the scope of the appended claims, the present invention may be practiced otherwise than as specifically described herein.

## Claims

1. An imaging apparatus, comprising:
an optical system for imaging an object, said optical system including at least two lens groups (11,12) each having at least one lens;
a collapsible lens barrel configured to move the at least two lens groups (11,12) along a first optical axis (31) toward an opposite side of an object when the lens barrel is collapsed in a collapsing mode, said collapsible lens barrel moving the at least two lens groups (11, 12) along the first optical axis (31) toward the object in a photographing mode; and
a bending optical system including a reflection member (13) configured to reflect a light coming from the object and passing through the at least two lens groups (11, 12) to a direction in parallel to a second optical axis (32) substantially perpendicular to the first optical axis (31);
wherein the at least two lens groups (11,12) and the reflection member (13) are positioned on the first and second optical axes (31,32), respectively in the photographing mode; wherein a prescribed space is made by evacuating at least one of the at least two lens groups (11, 12) from the first optical axis (31) while moving said reflection member (13) along the second optical axis (32) in the collapsing mode;
wherein the other one of the at least two lens groups (11, 12) is moved and installed in the prescribed space in the collapsing mode;
said at least two lens groups (11, 12) includes first and second lens groups arranged in this order from the object and said second lens group (12) is configured to be evacuated from the first optical axis (31) in the collapsing mode;
said first lens group (11) is configured to be moved and installed into the prescribed space in the collapsing mode; **characterized in that** said second lens group (12) is configured to be evacuated from the first optical axis (31) when the prescribed space is formed by moving the reflection member (13) along the second optical axis (32) and moving the second lens group (12) in to the prescribed space;
wherein the imaging apparatus further comprises:
a first mechanism (22, 23, 24) configured to move the second lens group (12) along the first optical axis (31) and evacuating the second lens group (12) therefrom to the other position; and
a second mechanism (22,46) configured to move the first lens group (11) back and forth along the first optical axis;
wherein said first and second mechanisms commonly use an actuator (41).

2. The imaging apparatus as claimed in claim 1, wherein the second lens group (12) is configured to be upwardly evacuated from the first optical axis (31).

## Patentansprüche

1. Abbildungsvorrichtung, die umfasst:
ein optisches System zum Abbilden eines Objekts, wobei das optische System wenigstens zwei Linsengruppen (11, 12) enthält, wovon jede wenigstens eine Linse besitzt;
einen zusammenklappbaren Linsentubus, der konfiguriert ist, um die wenigstens zwei Linsengruppen (11, 12) längs einer ersten optischen Achse (31) zu einer einem Objekt gegenüberliegenden Seite zu bewegen, wenn der Linsentubus in einem Zusammenklappmodus zusammengeklappt ist, wobei der zusammenklappbare Linsentubus in einem Photographiermodus die wenigstens zwei Linsengruppen (11, 12) längs der ersten optischen Achse (31) zu dem Objekt bewegt; und
ein optisches Krümmungssystem, das ein Reflexionselement (13) enthält, das konfiguriert ist, um von dem Objekt ankommendes und sich durch die wenigstens zwei Linsengruppen (11, 12) bewegendes Licht in eine Richtung parallel zu einer zweiten optischen Achse (32), die zu der ersten optischen Achse (31) im Wesentlichen senkrecht ist, zu reflektieren;
wobei die wenigstens zwei Linsengruppen (11, 12) und das Reflexionselement (13) in dem Photographiermodus auf der ersten bzw. der zweiten optischen Achse (31, 32) positioniert sind,
wobei ein vorgeschriebener Raum durch Entnehmen wenigstens einer der wenigstens zwei Linsengruppen (11, 12) aus der ersten optischen Achse (31), während das Reflexionselement (13) im Zusammenklappmodus längs der zweiten optischen Achse (32) bewegt wird, geschaffen wird;
wobei die andere der wenigstens zwei Linsengruppen (11, 12) im Zusammenklappmodus bewegt und in dem vorgeschriebenen Raum installiert wird;
wobei die wenigstens zwei Linsengruppen (11, 12) eine erste und eine zweite Linsengruppe umfassen, die in dieser Reihenfolge ausgehend von dem Objekt angeordnet sind, und die zweite Linsengruppe (12) konfiguriert ist, um im Zusammenklappmodus aus der ersten optischen Achse (31) entnommen zu werden;
wobei die erste Linsengruppe (11) konfiguriert ist, um im Zusammenklappmodus in den vorgeschriebenen Raum bewegt und darin installiert zu werden;
**dadurch gekennzeichnet, dass** die zweite Linsengruppe (12) konfiguriert ist, aus von der ersten optischen Achse (31) entnommen zu werden, wenn der vorgeschriebene Raum durch Bewegen des Reflexionselements (13) längs der zweiten optischen Achse (32) und Bewegen der zweiten Linsengruppe (12) in den vorgeschriebenen Raum gebildet ist;
wobei die Abbildungsvorrichtung ferner umfasst:
einen ersten Mechanismus (22, 23, 24), der konfiguriert ist, um die zweite Linsengruppe (12) längs der ersten optischen Achse (31) zu bewegen und die zweite Linsengruppe (12) hiervon in die andere Position zu entfernen; und
einen zweiten Mechanismus (22, 46), der konfiguriert ist, um die erste Linsengruppe (11) längs der ersten optischen Achse hin und zurück zu bewegen;
wobei der erste und der zweite Mechanismus gemeinsam einen Aktor (41) verwenden.

2. Abbildungsvorrichtung nach Anspruch 1, wobei die zweite Linsengruppe (12) konfiguriert ist, um aus der ersten optischen Achse (31) nach oben entnommen zu werden.

## Revendications

1. Appareil de formation d'image, comprenant :
un système optique pour former une image d'un objet, ledit système optique comprenant au moins deux groupes de lentilles (11, 12) comportant chacun au moins une lentille ;
un barillet d'objectif télescopique configuré pour déplacer lesdits au moins deux groupes de lentilles (11, 12) le long d'un premier axe optique (31) vers un côté opposé d'un objet lorsque le barillet d'objectif est dans un mode rétracté, ledit barillet d'objectif télescopique déplaçant lesdits au moins deux groupes de lentilles (11, 12) le long du premier axe optique (31) vers l'objet dans un mode de photographie ; et
un système optique de flexion comprenant un élément de réflexion (13) configuré pour réfléchir une lumière provenant de l'objet et traversant lesdits au moins deux groupes de lentilles (11, 12) dans une direction parallèle à un deuxième axe optique (32) sensiblement perpendiculaire au premier axe optique (31) ;
dans lequel lesdits au moins deux groupes de lentilles (11, 12) et l'élément de réflexion (13) sont positionnés sur les premier et deuxième axes optiques (31, 32), respectivement, dans le mode de photographie ;
dans lequel un espace prescrit est réalisé en évacuant au moins l'un desdits au moins deux groupes de lentilles (11, 12) du premier axe optique (31) tout en déplaçant ledit élément de réflexion (13) le long du deuxième axe optique (32) dans le mode rétracté ;
dans lequel l'autre desdits au moins deux groupes de lentilles (11, 12) est déplacé et installé dans l'espace prescrit dans le mode rétracté ;
lesdits au moins deux groupes de lentilles (11, 12) comprennent des premier et deuxième groupes de lentilles agencés dans cet ordre à partir de l'objet et ledit deuxième groupe de lentilles (12) est configuré pour être évacué du premier axe optique (31) dans le mode rétracté ;
ledit premier groupe de lentilles (11) est configuré pour être déplacé et installé dans l'espace prescrit dans le mode rétracté ;
**caractérisé en ce que** ledit deuxième groupe de lentilles (12) est configuré pour être évacué du premier axe optique (31) lorsque l'espace prescrit est formé en déplaçant l'élément de réflexion (13) le long du deuxième axe optique (32) et en déplaçant le deuxième groupe de lentilles (12) dans l'espace prescrit ;
dans lequel l'appareil de formation d'image comprend en outre :
un premier mécanisme (22, 23, 24) configuré pour déplacer le deuxième groupe de lentilles (12) le long du premier axe optique (31) et évacuer le deuxième groupe de lentilles (12) de celui-ci vers l'autre position ; et
un deuxième mécanisme (22, 46) configuré pour déplacer le premier groupe de lentilles (11) en va-et-vient le long du premier axe optique ;
dans lequel lesdits premier et deuxième mécanismes utilisent en commun un actionneur (41).

2. Appareil de formation d'image selon la revendication 1, dans lequel le deuxième groupe de lentilles (12) est configuré pour être évacué vers le haut du premier axe optique (31).
